# EUROPEAN PATENT SPECIFICATION

(11) **EP 2 983 499 B1**
(45) Date of publication and mention of the grant of the patent: **12.04.2017**
(21) Application number: 13826835.4
(22) Date of filing: 20.12.2013
(51) Int. Cl.: A23L 5/00, A23L 33/10, A23L 33/105, A23L 33/16

(54) **FOOD SUPPLEMENT COMPENSATING UNFAVOURABLE VACCINATION EFFECTS**
NAHRUNGSERGÄNZUNGSMITTEL ZUR KOMPENSATION NACHTEILIGER IMPFAUSWIRKUNGEN
COMPLÉMENT ALIMENTAIRE COMPENSANT DES EFFETS DE VACCINATION INDÉSIRABLES

(30) Priority: 20.12.2012 CZ 20120948
(43) Date of publication of application: 17.02.2016
(73) Proprietor: Vackár, Petr, 564 01 Zamberk (CZ)
(72) Inventor: FÍLA, Michal, 566 01 Vysoké Mýto (CZ)
(74) Representative: Vandelikova, Jana
(86) International application number: PCT/CZ2013/000174
(87) International publication number: WO 2014/094697

(56) References cited:
- FR-A1- 2 949 646
- US-A1- 2003 103 954
- US-A1- 2003 105 027
- US-A1- 2003 105 031

## Description

### Field of the invention

The invention concerns a natural food supplement that compensates unfavourable vaccination effects.

### Background of the invention

Chemicals used to produce vaccines are known as neurotoxins and contain mercury, aluminium, or formaldehyde. The use of these toxins is not banned in the vaccine-producing industry.

Aluminium is currently the most commonly used adjuvant in vaccines. Many studies have shown an association between aluminium administered as injections and allergic reaction in the skin, the formation of antibodies giving evidence of immune system activation, increased aluminium content in the cerebrospinal fluid and muscles of vaccinated patients.

Both aluminium ions and excessive immunological stimulation by combined antigens activate microglia in the brain, cause excessive activation of glutamate receptors, and are accompanied by the development of manifestations of immune system toxicity. This is one of the pathophysiological processes underlying the development of autism.
It is also obvious that inflammatory processes may be caused by both adjuvants and various other substances in the vaccines, such as gelatine, hydrolysed proteins, glutamate. Us2003/105027A1 describes a nutritional supplement comprising various antioxidants, vitamins curcumin and germanium for preventing reducing and treating radiation injury.

### Summary of the invention

The shortages/deficiencies stated above are largely removed by the food supplement of the invention that compensates for the unfavourable vaccination effects that contains, as its active substance 1% up to 75% of curcumin, 1% to 25% of organic germanium, and complementary substances. It further contains a sugar component and/or the sugar trehalose in an amount that is up to ten times higher than the weight amounts of the active substances. It can also contain 0.5% to 3% of magnesium (magnesium lactate), up to 200,000 IU of vitamin D3 in one daily dose, and 20% to 40% of vitamin C. The food supplement also contains both a sweetening agent and a filling agent in amounts of up to ten times the weight amounts of the complementary substances in the form of free fluid or food or flavouring agent.

The natural food supplement of the invention compensates the unfavourable effects of vaccination, especially acute inflammatory reactions, and inhibits the neurotoxicity of aluminium in cases where the vaccine used contains aluminium salts as adjuvant. The anti-inflammatory effect is exhibited mainly by curcumin, together with the organic germanium Ge-132 that also improves tissue oxygenation. Curcumin reduces the neurotoxicity of aluminium by forming a complex with it. Both substances function as effective adaptogens. The food supplement, medicinal preparation is sweetened with the sugar trehalose that functions as a substance that suppresses denaturation of proteins. The remaining components of the food supplement, medicinal preparation, i.e. magnesium lactate, vitamin D3 and vitamin C boost the anti-inflammatory, antioxidant, immunostimulant and adaptogenic effects of curcumin and Ge-132. All substances used in the syrup are natural substances.

Another advantage of the natural food supplement is seen in the fact that no adverse (side) effects of its individual components are known.

### Detailed description of the invention

### Example 1

The food supplement may be prepared in the form of syrup with the following composition:
100 ml of syrup (10 daily doses) contain:
   Curcumin: 2,000 mg
   Organic germanium: 500 mg
   Trehalose: 25,000 mg
   Magnesium (magnesium lactate): 1,400 mg
   Vitamin D 2,000,000 IU of vitamin D3
   Vitamin C 20,000 mg
   Water to 100 ml

### Example 2

The food supplement may be prepared in the form of capsules.

One capsule (half the daily dose) contains:
Curcumin: 100 mg
Organic germanium: 25 mg
Trehalose: 1,250 mg
Magnesium (magnesium lactate): 70 mg
Vitamin D 100,000 IU of vitamin D3
Vitamin C 1,000mg

### Industrial applicability

The natural food supplement of the invention compensates the unfavourable effects of vaccination, especially acute inflammatory reactions and supresses the neurotoxicity of aluminium in cases where the vaccine used contains aluminium salts as adjuvant.

## Claims

1. Food supplement for use in compensating for the unfavourable vaccination effects that is **characterized by the fact** that content of the active substances of 1% to 75% of curcumin, 1% to 25% of organic germanium and complementary substances.

2. Food supplement according to claim 1 that is **characterized by the fac** that complementary substances in the form of a sugar component and/or the sugar trehalose in amounts of up to ten times the weight amounts of the active substances.

3. Food supplement according to claim 1 that is **characterized by the fac** that complementary substances in the form of 0.5% to 3% of magnesium (magnesium lactate), up to 200,000 IU of vitamin D3 for one daily dose, and 20% to 40% of vitamin C.

4. Food supplement according to claims 1 - 3 that is **characterized by the fac** that content of a filling substance in an amount of up to ten time the weight amount of the complementary substances in the form of suitable fluid or food or flavouring agent.

## Patentansprüche

1. Die Nahnmgsergänzung 2 für die Nutzung bei der Kompensation der (2 die die negativen Auswirkungen) der Impfung kompensiert. Charakteristisch ist der Fakt, dass der Inhalt aus aktiven Substanzen besteht, 1% bis 75% Kurkumin, 1% bis 25% organisches Germanium und aus ergänzenden Substanzen.

2. Die Nahrungsergänzung nach der Behauptung 1 kann durch den Fakt charakterisiert werden, dass die ergänzende Substanzen in der Form der Zuckerkomponente und/oder Zucker-Trehalose in der Menge des Zehnfachen des Gewichtes der aktiven Substanzen enthalten sind.

3. Die Nahrungsergänzung nach der Behauptung 1 kann man durch den Fakt charakterisieren, dass die ergänzenden Substanzen in Form von 0,5% bis 3% Magnesium (Magnesiumlactat), max. 200.000 IU Vitamin D3 - eine tägliche Dosis und 20% bis 40% Vitamin C enthalten sind.

4. Die Nahrungsergänzung nach den Behauptungen 1-3 kann man durch den Fakt charakterisieren, dass die Füllsubstanz in der Menge bis des Zehnfachen des Gewichtes der ergänzenden Substanzen in der Form der geeigneten Flüssigkeit oder des Nahrungsmittels oder des Aromastoffes enthalten ist.

## Revendications

1. Complément alimentaire indiqué dans la réduction des effets indésirables de la vaccination, **caractérisé par le fait que** sa teneur en substances actives est de 1 % à 75 % de curcumine, 1 % à 25 % de géranium biologique, et qu'il contient des substances complémentaires.

2. Complément alimentaire indiqué dans l'allégation 1, **caractérisé par le fait qu'**il contient des substances complémentaires sous forme de composants sucrés et/ou de tréhalose dont la teneur peut atteindre dix fois le poids des substances actives.

3. Complément alimentaire indiqué dans l'allégation 1, **caractérisé par le fait qu'**il contient des substances complémentaires sous forme de magnésium (lactate de magnésium) de 0,5 % à 3 %, jusqu'à 200 000 UI de vitamine D3 pour une dose quotidienne, et de 20 % à 40 % de vitamine C.

4. Complément alimentaire indiqué dans les allégations 1 à 3, **caractérisé par le fait qu'**il contient une substance de remplissage sous la forme d'un liquide, d'un aliment ou d'un aromatisant adapté, et dont la teneur peut atteindre dix fois le poids des substances complémentaires.
